(19) Europäisches Patentamt
European Patent Office
Office européen des brevets

(11) Publication number: 0 262 656 A2

(12) EUROPEAN PATENT APPLICATION

(21) Application number: 87114251.9

(51) Int. Cl.4: B01D 13/04

(22) Date of filing: 30.09.87

(30) Priority: 03.10.86 JP 236571/86

(43) Date of publication of application: 06.04.88 Bulletin 88/14

(84) Designated Contracting States: BE CH DE FR GB IT LI NL SE

(71) Applicant: KANEGAFUCHI KAGAKU KOGYO KABUSHIKI KAISHA
2-4 Nakanoshima 3-chome
Kita-ku Osaka-shi Osaka-fu(JP)

(72) Inventor: Eguchi, Tamiyuki
14-5, Koeidai 5-chome Kita-ku
Kobe-shi Hyogo-ken(JP)
Inventor: Nakatani, Masanori
4-10, Moriminami-machi 1-chome
Higashinada-ku
Kobe-shi Hyogo-ken(JP)

(74) Representative: Türk, Gille, Hrabal
Bruckner Strasse 20
D-4000 Düsseldorf 13(DE)

# (54) A membrane for the separation of blood plasma components.

(57) A membrane in the form of a hollow fiber for the separation of low density lipoprotein and other blood plasma components with a permeating ability not higher than that of low density lipoprotein, having an inner diameter of 120 to 300 µm, a wall thickness of 15 to 80 µm, a maximum diameter of pores on the outer surface of not less than 0.1 µm, a permeability of a dextran with mean molecular weight $1.1 \times 10^5$ of 83 to 92 %, and a permeability of a dextran with mean molecular weight $5 \times 10^5$ of 25 to 55 %. The hollow fiber membrane can selectively and efficiently separate low density lipoprotein and other blood plasma components with a permeating ability not higher than that of low density lipoprotein from blood plasma.

EP 0 262 656 A2

Xerox Copy Centre

## A MEMBRANE FOR THE SEPARATION OF BLOOD PLASMA COMPONENTS

The present invention relates to a membrane for the separation of blood plasma components, and more specifically to a membrane in the form of a hollow fiber for the separation of low density lipoprotein (hereinafter referred to as "LDL") and other blood plasma components with a permeating ability not higher than that of LDL.

In recent years, there has been tried a treatment for various obstinate diseases, in which after blood is taken out from the body and pathogenic substances in the blood are removed, the treated blood is returned to the body, so-called "extracorporeal circulation treatment". As generally known, when blood is taken out from the body, blood cells are physiologically quite unstable, and are easily injured. For instanse, there occurs a decrease in their number because of their adhesion to the matters with which blood cells contact, hemolysis or coagulation. Therefore, in an extracorporeal circulation treatment, blood is separated into unstable blood cells and relatively stable blood plasma by centrifugation or by using a membrane, and then the blood plasma containing pathogenic substances is treated by an adsorbent or a membrane for the separation of blood plasma components.

There are already known many kinds of adsorbent for the separation of LDL and other blood plasma components with a permeating ability not higher than that of LDL. For instance, such adsorbents are disclosed in Japanese Unexamined Patent Publication (Tokkyo Kokai) No. 27559/1983, No. 206044/1984 and No. 150833/1985.

These adsorbents have a defect that they adsorb not only LDL but also other valuable components such as high density lipoprotein (hereinafter referred to as "HDL"), blood coagulation factors, complements, electrolytes or the like. Particularly, complements are desired to remain in the plasma since complements are important substances taking a fundamental role in an immune system of a living body. Further, adsorbents have another problem in their capacity, i.e., as a matter of course, adsorbents cannot adsorb beyond their capacity unless the adsorbents are treated to recover their adsorption capacity when the amount of adsoption mounts up to the saturated amount of adsorption.

On the other hand, conventional membranes for the separation are also used for removing high molecular weight components. However, though these membranes do not remove components of relatively low molecular weight, e.g. complements, blood coagulation factors or electrolytes so that such components can remain in the plasma, the membrances have a serious problem that they remove a large amount of important components having relatively high molecular weight, e.g. HDL, fibrinogen, immunoproteins and albumin. A membrane has an advantage that their capacity lasts as long as clogging does not occur. However the conventional membranes for the separation have problem that in using them, clogging occurs with the passage of time and the filtration pressure rises very high.

Thus, conventional adsorbents and membranes for the separation cannot remove a large amount of LDL selectively and efficiently.

Even if the removal of components other than LDL and other blood plasma components with a permeating ability not higher than that of LDL connot be avoided, the components removed should be limited to such components that the removal of them do not seriously influence on the living body, and the amount of the components removed should be as small as possible. For instance, when the removal of the IgM which has a much higher molecular weight than that other immunoproteins have cannot be avoided, the immunoproteins removed should be limited thereto, and other main immunoproteins such as IgG and IgA should not be removed from the plasma.

Further, in the conventional membranes for the separation, the functioning part cannot be distinguished. Among such membranes, there is one having a structure similar to a filter of so-called depth type. For a superior selectivity, only the part of membrane, where the plasma filtered contacts with the membrane, should have the separation function, and it is necessary to optimize the permiability in such part.

Taking into account the above points, the present inventors have found that there can be obtained a membrane with a superior separation function which has not been hitherto obtained, by overcoming that in the separation of plasma components with conventional membranes for the separation, a large amount of immunoproteins are particularly removed though a large amount of blood plasma components concerning blood coagulation system and complement system remain in the plasma.

By evaluating the selectivity of membranes for the separation with varying their structure in detail, there has been now found a membrane having such selectivity that in the separation of plasma components using the membrane almost all LDL and other blood plasma components with a permeating ability not higher than that of LDL are removed, almost all blood plasma components with a permeating ability higher than that of LDL remain in the plasma, and a considerable amount of IgM remains. It has been also found that the above membrane has an advantage that in using the membrane, clogging does not occur and consequently the filtration pressure is stable for a long time.

In accordance with the present invention, there is provided a membrane in the form of a hollow fiber for the separation of LDL and other blood plasma components with a permeating ability not higher than that of LDL, having an inner diameter of 120 to 300 µm, a wall thickness of 15 to 80 µm, a maximum diameter of pores on the outer surface of not less than 0.1 µm, a permeability of a dextran with mean molecular weight $1.1 \times 10^5$ of 83 to 92 %, and a permeability of a dextran with mean molecular weight $5 \times 10^5$ of 25 to 55 %.

In the present invention, the permeability of a dextran is the value determined by the following procedure.

While a 0.1 % by weight aqueous solution of a dextran is transmitted to a module of 16 cm in effective length and 500 $cm^2$ in effective area of the inner surface of hollow fibers at a rate of 5 ml/min at 37°C, the aqueous solution of dextran is filtered for 1 hour at a rate of 1.5 ml/min. Then the concentration of dextran in the filtrate is measured by the Total Organic Carbon Analyzer (TOC-10B, made by Shimazu Seisakusho Kabushiki Kaisha), and the permeability is calculated according to the following formula.

$$\text{Permeability (\%)} = \frac{\text{Concentration of dextran in a filtrate}}{\text{Concentration of dextran in an original solution}} \times 100$$

As materials for the hollow fiber membrane of the present invention, various known high molecular compounds such as a cellulose acetate, a regenerated cellulose, a polyacrylonitrile, an ethylene-vinyl alcohol copolymer, a polymethyl methacrylate, an aromatic polyamide, a polyvinylidene fluoride and an aromatic polysulfone can be used. Among them, an aromatic polysulfone is particularly preferable since the structure of the membrane made of an aromatic polysulfone can be easily controlled. Typical examples of the aromatic polysulfone are, for instance, polysulfones having the following formula (I) or (II).

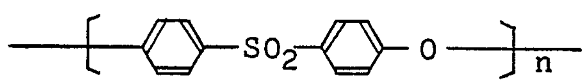

(I)

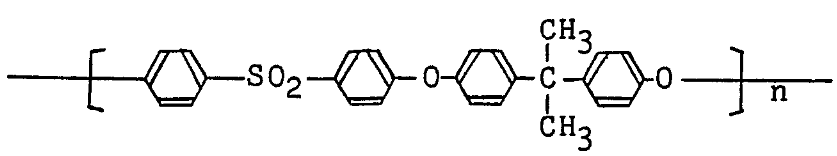

(II)

Among them, the polysulfone (II) is more preferable since the structure of membrane made of the polysulfone (II) can be easily controlled in comparison with that of the polysulfone (I).

Using the above materials, the hollow fiber membrane of the present invention can be obtained by a known process for preparing membranes. A process for preparing the hollow fiber membrane made of an polysulfone is, for instance, described in Japanese Unexamined Patent Publication No. 222112/1985.

The inner diameter of the hollow fiber membrane of the present invention is 120 to 300 µm, preferably 150 to 250 µm. In case the inner diameter is less than about 120 µm, there is a possibility of denaturation of plasma proteins since the pressure drop at the time when blood plasma is passed through the membrane is so much. In case the inner diameter is more than about 300 µm, the effective area of the inner surface of hollow fibers per module becomes too small.

The wall thickness of the hollow fiber membrane of the present invention is preferably 15 to 80 µm, more preferably 25 to 50 µm. In case the wall thickness of membrane is less than about 15 µm, the mechanical strength of the membrane is too weak to be handled. In case the membrane is more than 80 µm, the effective area as a membrane per module becomes too small.

LDL has a diameter of 200 to 300 Å. A large component among blood plasma components with a permeating ability higher than that of LDL has a diameter of about 100 Å. In order to let such large components pass through the membrane from the inside to the outside without their staying inside the membrane, accoring to the invnetors' study, there should be a lot of pores having a maximum diameter of not less than 0.1 µm on the outer surface of the membrane. As a matter of course, on the section of the membrane, there also should be pores having a diameter of not less than 0.1 µm.

In the present invention, the term "permeating ability" means the ability of a substance passing through the hollow fiber membrane.

The term "maximum diameter" as used herein means the length of the largest minor axis of the pores or openings on an outer surface of hollow fiber as observed by a scanning electron microscope at a 10,000 × magnification.

As is presumed from the above description, the selectivity of the membrane of the present invention is based on the structure of the inner suface of membrane. That is, it is presumed that on the inner surface of membrane, there are pores through which LDL and other components with a permeating ability not higher than that of LDL do not pass but components with a permeating ability higher than that of LDL pass, and that the pores on the outer surface or on the section are considerably larger than the pores on the inner surface. It is difficult to electron microscopically precisely determine such size of pores on the inner surface. Measuring the permeability of various molecular weight of dextrans, the present inventors have found that the permeability of blood plasma components closely corresponds to that of dextrans and thereby have determined the hollow fiber membrane of the present invention. That is, as a result of measurments of permeability of various dextrans as to the membrane of the present invnetion according to the aforementioned process, the permeability of a dextran with mean moleculr weight $1.1 \times 10^5$ was 83 to 92 %, preferably 85 to 91 %, and the permeability of a dextran with mean molecular weight $5 \times 10^5$ was 25 to 55 %, preferably 30 to 50 %. Beyond the above determination of the permeability, the selectivity of the hollow fiber membrane becomes poor because of less amount of LDL removed or because of removal of valuable low molecular weight plasma components.

The hollow fiber membrane of the present invention has a selectivity satisfying the conditions that the permeability of LDL is not more than 20 %, the permeability of IgM is not less than 20 %, and the permeability of components with a permeating ability higher than that of LDL, e.g. fiblinogen, IgG, IgA, HDL and complements is not less than 80 to 90 %. Such selectivity is stably maintained over 3 hours and during that time the filtration pressure hardly rises. Thereofore, the hollow fiber membrane of the present invention is much superior in all points of selectivity, stability and capasity in comparison with conventional adsorbents or membranes for the separation.

The present invention is more specifically described and explained by the following Example. It is to be understood that the present invention is not limited to the Example, and various changes and modifications may be made in the invention without departing from the spirit and scope thereof.

Exmaple 1

A 20 % by weight solution of polysulfone (P-3500 made by Union Carbide Corp.) in dimethylsulfoxide was extruded from a double-ring nozzle having an outer diameter of 400 µm, an inner diameter of 250 µm and a core diameter of 150 µm at a rate of 2.5 g/min at 80°C in the air, while extruding propylene glycol from the core at a rate of 1.8 g/min at 30°C, and after running in the air for 15 cm, the membrane precursor was soaked in a warmed water of 60°C, and was reeled at a rate of 50 m/min in a warmed water of 45°C. Then the membrane was washed with hot water, and was air-dried at 40°C for one day.

The membrane was observed by means of an electron microscope to find that the membrane had an inner diameter of 200 µm, a wall thickness of 25 µm, and a section having an uniform network structure with pores of about 1 µm in diameter. On the outer surface, there were a lot of pores of not more than 0.3 µm in diameter. On the inner surface, few pores with the largest minor axis of about 0.1 µm were found.

A small module of 16 cm in effective length and 500 $cm^2$ in effective area of the inner surface of the membrane was prepared with 500 of the obtained membranes by means of a conventional process. After a 30 % by volume aqueous solution of ethanol was passed through the module to make the dried membrane hydrophilic, the aqueous solution of ethanol was replaced with water. A 0.1 % by weight aqueous solution of

a dextran with mean molecular weight $1.1 \times 10^5$ and a 0.1 % by weight aqueous solution of a dextran with mean molecular weight $5 \times 10^5$ (T-110 and T-500 respectively, made by Pharmacia Fine Chemicals AB) were transmitted to the inside of hollow fiber at a rate of 5 ml/min at 37°C, and were filtered to the outside of hollow fiber at a rate of 1.5 ml/min. After one hour, the permeability of the dextrans was measured. The permeability of the dextran with mean molecular weight $1.1 \times 10^5$ was 90 % and the permeability of the dextrane with mean molecular weight $5 \times 10^5$ was 45 %.

Using a module prepared according to the same process as above except that the aqueous solution of ethanol was replaced with a physical saline solution instead of water, human blood plasma was filtered and the permeability of plasma components separated was measured. At room temperature (25°C), a blood plasma whose temperature was kept at 36°C was transmitted to the inside of hollow fiber at a rate of 1.5 ml/min, and 95 % by volume of the plasma transmitted was filtered. The transmembrane pressure was 10 mmHg and it was not changed during 3 hours of continuous operating period. The term "transmembrane pressure" in the present invention means the difference between an average value of plasma pressure at the inlet of the module and plasma pressure at the outlet of the module and a value of filtrate pressure. During the operating period of 3 hours, the original plasma, the plasma at the outlet of the module and the filtrate were collected every 30 minites, and the concentration of albumin, total protein, fibrinogen, IgG, IgA, HDL, IgM and LDL in the original plasma and the filtrate was measured. The permeability of each components was calculated according to the following formula.

$$\text{Permeability} = \frac{\text{Concentration of a component in a filtrate}}{\text{Concentration of a component in an origianal plasma}}$$

The permeability of blood plasma components was shown in Table 1.

The permeability of each blood component was not changed during three hours of continuous operating period.

Comparative Example

A hollow fiber membrane was taken out from a commercially available module, having a good reputation for selectivity for the separation of LDL, for the separation of blood plasma components, which is made of an ethylene-vinyl alcohol copolymer, and was evaluated as the membrane of Example 1 was evaluated.

The hollow fiber membrane was observed by means of a scanning electron microscope to find that the membrane had an inner diameter of about 200 µm, a wall thickness of about 50 µm, and a section having a network structure. There were very few pores on the outer surface and there were a lot of pores of not more than 0.5 µm in diameter on the inner surface in contrast to the hollow fiber membrane of Example 1 having lots of pores on the outer surface and few pores on the inner surface.

Using a small module prepared according to the process in Example 1 except that the treatment with an aqueous solution of ethanol was not carried out since the membrane was hydrophilic, the permiability of dextrans and of human blood plasma components was measured.

The permeability of both the dextran with mean molecuar weight $1.1 \times 10^5$ and the dextran with mean molecuar weight $5 \times 10^5$ was about 70 % and there was very little difference between them. When human blood plasma was filtered, the transmembrane pressure was 10 mmHg at first, and then was increased gradually. After 3 hours, the transmembrane pressure reached 40 mmHg. The permeability of plasma components was shown in Table 1.

Talbe 1

| Blood plamsa component | Permeability Ex. 1 | Com. Ex. |
|---|---|---|
| total protein | 1.0* | 0.76 |
| abbmin | 1.0 | 0.78 |
| IgG | 1.0 | 0.75 |
| IgA | 1.0 | 0 |
| HDL | 1.0 | 0.7 |
| fibrinogen | 0.9 | 0 |
| IgM | 0.3 | 0 |
| LDL | 0 | 0 |

* the permeability of total protein in Ex. 1 is very nearly 1.0

As is apparent from the comparison of the results of Example 1 and Comparative Example, the hollow fiber membrane of the present invention is much superior in selectivity and stability in comparison with conventional membranes.

In addition to the ingredients used in the Example, other ingredients can be used in the Example as set forth in the sepcification to obtain substantially the same results.

## Claims

1. A membrane in the form of a hollow fiber for the separation of low density lipoprotein and other blood plasma components with a permeating ability not higher than that of low density lipoprotein, having an inner diameter of 120 to 300 µm, a wall thickness of 15 to 80 µm, a maximum diameter of pores on the outer surface of not less than 0.1 µm, a permeability of a dextran with mean molecular weight $1.1 \times 10^5$ of 83 to 92 %, and a permeability of a dextran with mean molecular weight $5 \times 10^5$ of 25 to 55 %.

2. The hollow fiber membrane of Claim 1, wherein said permeability of a dextran with mean molecular weight $1.1 \times 10^5$ is 85 to 91 % and said permeability of a dextran with mean molecular weight $5 \times 10^5$ is 30 to 50 %.

3. The hollow fiber membrane of Claim 1, which is made of an aromatic polysulfone.